# FASCICULE DE BREVET EUROPEEN

(11) **EP 1 401 279 B1**
(45) Date de publication et mention de la délivrance du brevet: **17.08.2005**
(21) Numéro de dépôt: 02762290.1
(22) Date de dépôt: 14.06.2002
(51) Int. Cl.: A01N 59/00

(54) **POUDRE ACARICIDE**
AKARIZIDPULVER
ACARICIDE POWDER

(30) Priorité: 19.06.2001 FR 0108148
(43) Date de publication de la demande: 31.03.2004
(73) Titulaire: SOLVAY (Société Anonyme), 1050 Bruxelles (BE)
(72) Inventeur: PASCAL, Jean-Philippe, F-54000 NANCY (FR); PALANGIE, Nicolas, F-60880 LE MEUX (FR)
(74) Mandataire: Jacques, Philippe
(86) Numéro de dépôt international: PCT/EP2002/006668
(87) Numéro de publication internationale: WO 2002/102158

(56) Documents cités:
- EP-A- 0 061 876
- WO-A-00/06681
- WO-A-94/16126
- DATABASE WPI Derwent Publications Ltd., London, GB; AN 1993-096726 XP002214316 RIKAGAKU KENKYUSHO: "Insecticidal compsns. which do not chemically injure plants and animals - contg. aliphatic polyvalent alcohol fatty acid ester(s) coating one water-soluble carbonate, bicarbonate, chloride, phosphate and sulphate" & JP 05 039206 A 19 février 1993 (1993-02-19)
- DATABASE WPI Derwent Publications Ltd., London, GB; AN 1984-297364 XP002194130 WAKO CHEM IND CO LTD: "Carpet tatami tick controlling agent - comprising inorganic powder, sulphur powder, diluent and aroma" & JP 59 184113 A (WAKO CHEM IND CO LTD) 19 octobre 1984 (1984-10-19)

## Description

L'invention concerne une poudre acaricide. Elle concerne également l'utilisation d'une telle poudre.

Par poudre acaricide on entend une poudre au contact de laquelle les acariens ne peuvent survivre. Les acariens peuvent être à l'état d'oeufs, de larves ou adultes. L'action de la poudre peut être directe. Elle peut aussi être indirecte, par exemple lorsque la poudre acaricide détruit une substance nécessaire à la survie de l'acarien.

Les acariens sont de petits arachnides, de dimensions proches du dixième de millimètre, qui se développent notamment dans les literies et tapis des habitations et susceptibles de provoquer des réactions allergiques chez l'être humain. Leurs conditions de vie optimales requièrent une humidité comprise entre 55 et 85 % et une température comprise entre 15 et 35°C. Les acariens se nourrissent essentiellement des squames et matières organiques qui s'accumulent dans les textiles épais. Un adulte humain perd en moyenne 1,5 g de peau morte par jour, ce qui suffit à nourrir 1,5 millions d'acariens.

Il est connu et largement répandu de combattre les acariens au moyen de pyrèthre et de pyréthrinoïdes de synthèse, tels que la perméthrine. Ces substances sont des neuro-toxiques dont la nocivité pour l'homme est de plus en plus établie.

Des substituts aux pyréthrinoïdes, qui soient inoffensifs pour l'homme, sont réclamés par de nombreux utilisateurs.

JP-A-50 39206 décrit une poudre insecticide et acaricide comprenant des granules de sels inorganiques de potassium ou sodium comme les carbonates, les bicarbonates, les phosphates ou biphosphates et les chlorites de dimensions inférieures à 100 mesh (>150 µm) enrobés dans des polyalcools esterifies. Les granules enrobés ont un diamètre de 200-400 mesh (74-37 µm).

L'invention vise à fournir une poudre, naturelle et inoffensive pour l'homme, permettant d'éliminer les acariens de manière simple, efficace et économique.

En conséquence, l'invention concerne une poudre acaricide comprenant plus de 40 % en poids de bicarbonate de sodium.

Le bicarbonate de sodium est un produit réputé inoffensif pour l'homme. Il est même autorisé par différents organismes (tels la FDA aux Etats-Unis) dans l'alimentation humaine.

On a observé que les acariens ne mangent pas la poudre acaricide conforme à l'invention mais que les grains fins de cette poudre adhèrent à la surface extérieure des acariens. Sans vouloir être lié par une explication théorique et sans exclure d'autres modes d'action, l'inventeur pense que la poudre acaricide conforme à l'invention détériorerait certains équilibres d'échanges membranaires du cuticule de l'acarien et de la coquille de l'oeuf, ce qui induirait leur déshydratation et finalement leur mort.

Des poudres ayant des granulométries fines sont apparues avoir un pouvoir acaricide plus élevé.

Dans le mode d'exécution de l'invention, 90 % des granules qui constituent la poudre ont un diamètre inférieur à 100 µm.

La poudre acaricide comprend plus de 40 % en poids de bicarbonate de sodium. On préfère qu'elle comprenne au moins 50 % de bicarbonate de sodium.

Dans un mode de réalisation avantageux de l'invention, la poudre acaricide comprend au moins 95 % de bicarbonate de sodium. Elle peut être constituée essentiellement de bicarbonate de sodium.

Selon un autre mode de réalisation avantageux de l'invention, la poudre acaricide comprend en outre de la terre de Sommière.

La terre de Sommière (parfois appelée également terre de Foulon) est une argile possédant des caractéristiques adsorbantes. Une poudre acaricide comprenant de la terre de Sommière possède en outre des propriétés nettoyantes. La poudre acaricide contient de préférence au moins 5 % de terre de Sommière.

Dans une variante recommandée de ce mode de réalisation, la poudre acaricide comprend plus de 40 % en poids de terre de Sommière. On préfère cependant qu'elle en comprenne moins de 60 %.

Selon un autre mode de réalisation avantageux de l'invention, la poudre acaricide comprend en outre de la terre de diatomées.

La terre de diatomée est un dépôt géologique de squelettes fossilisés d'organismes marins. Lorsqu'elle est broyée elle a l'apparence d'une poudre possédant également des propriétés adsorbantes et nettoyantes.

Dans ce mode de réalisation, il est avantageux que la poudre acaricide contienne au moins 5 % de terre de diatomée.

Dans une variante de ce mode de réalisation, on recommande que la poudre acaricide comprenne plus de 40 % en poids de terre de diatomée. Il est préférable qu'elle en contienne toutefois moins de 60 %.

Des poudres acaricides selon l'invention comprenant un mélange de terre de Sommière et de terre de diatomée sont aussi avantageuses.

L'invention concerne également l'utilisation de la poudre conforme à l'invention décrite ci-dessus pour le traitement de l'environnement humain.

Par environnement humain on entend les éléments matériels avec lesquels l'homme est en contact, propices au développement des acariens. Cet environnement comprend par exemple : literies (matelas, oreillers), tapis, moquettes, fauteuils, vêtements, peluches et toisons diverses.

Leur traitement au moyen de la poudre acaricide conforme à l'invention, qui est naturelle et inoffensive pour l'homme, est donc particulièrement avantageux.

Dans cette utilisation, il est critique que la poudre conforme à l'invention pénètre correctement au coeur de la texture à traiter. Dans certains cas il peut s'avérer préférable de mettre la poudre conforme à l'invention en solution dans de l'eau, appliquer la solution sur la surface à traiter et attendre l'évaporation de l'eau.

Cependant, on préfère que la poudre soit appliquée directement, à l'état solide, sur la surface à traiter.

Dans ce cas, on recommande que le traitement comprenne une action mécanique telle que projection, vibration ou brossage. La projection peut être assistée par la détente d'un gaz. Elle est alors communément appelée "spray".

Il est avantageux que le traitement soit fait à l'état solide et comprenne un brossage.

Dans une variante préférée de cette utilisation, la poudre conforme à l'invention est utilisée pour le traitement de tapis et moquettes.

La quantité de poudre acaricide à appliquer, par mètre carré, peut varier selon la nature de la surface à traiter. On a observé que des quantités supérieures à 10 g/m² sont en général nécessaires. Il est toutefois sans intérêt supplémentaire d'appliquer des quantités supérieures à 100 g/m².

Selon un mode d'exécution avantageux de cette variante, on applique une quantité de poudre acaricide ne dépassant pas 60 g par mètre carré.

Les exemples suivants illustrent de manière non limitative l'efficacité de la poudre conforme à l'invention pour la lutte contre les acariens.

### Exemple 1

L'exemple suivant illustre l'effet acaricide de la poudre conforme à l'invention, par mise en contact direct des acariens avec la poudre.

A cette fin, on a procédé de la manière suivante :

Les acariens utilisés ("*Dermatophagoides pteronyssinus*") proviennent d'une souche élevée sur un substrat constitué de 50 % en poids de germes de blé et de 50 % en poids de paillettes de levure de bière calibrées par tamisage (maille 1 mm). L'humidité a été maintenue à 75 % et la température entre 23 et 25°C.

10 g de poudre acaricide comprenant 98 % de bicarbonate de sodium et dont 90 % des granules ont un diamètre inférieur à 500 µm ont été déposés au fond d'une boîte de Petri.

Un millier d'acariens actifs ont été déposés sur la poudre.

L'expérimentateur a noté le taux de mortalité après 2h, 4h, 8h et 24h de contact permanent.

On a observé une mortalité de 100 % dès 2h de mise en contact.

Un lot témoin d'un millier d'acariens a été suivi en parallèle pour connaître la mortalité naturelle pendant le test.

On a observé une mortalité inférieure à 5 % après 24h
Ce test montre clairement l'effet acaricide de la poudre conforme à l'invention.

### Exemple 2

L'exemple suivant illustre l'effet acaricide de la poudre conforme à l'invention, en conditions semi-réalistes.

On a utilisé dans cet exemple les mêmes acariens et la même poudre acaricide que dans l'exemple 1.

Des dalles de moquette rase de 50X50 cm ont été infestées avec 3000 acariens et 5 g de poussière normalisée.

La poudre acaricide a été saupoudrée de façon homogène sur la surface, en utilisant les trois quantités suivantes : 20, 40 et 60 g/m². Les dalles ont ensuite été brossées.

On a noté la mortalité des acariens après 15 min, 30 min, 1h, 2h, 4h et 24h.

Un lot témoin d'un millier d'acariens est suivi en parallèle pour connaître la mortalité naturelle des acariens soumis au même brossage.

On a obtenu les résultats suivants :

| **Quantité de poudre acaricide** | **Durée d'exposition** | | | | | |
|---|---|---|---|---|---|---|
| | **15 min** | **30 min** | **1h** | **2h** | **4h** | **24h** |
| 20 g/m² | 0 % | 42 % | 79 % | 100 % | 100 % | 100 % |
| 40 g/m² | 1 % | 59 % | 92 % | 100 % | 100 % | 100 % |
| 60 g/m² | 0 % | 66 % | 95 % | 100 % | 100 % | 100 % |

Les taux de mortalité obtenus sur le lot non saupoudré de poudre acaricide restant inférieurs à 5 %, l'essai est valide et montre l'effet acaricide de la poudre conforme à l'invention en conditions semi-réalistes, déjà pour des quantités appliquées de 20 g/m².

### Exemple 3

Cet exemple illustre l'effet acaricide de la poudre conforme à l'invention, lorsque les acariens sont à l'état d'oeufs.

On a repris les conditions de l'exemple 1, sauf que les acariens sont à l'état d'oeufs.

| **Quantité de poudre acaricide** | **Nombre d'oeufs avant le traitement** | **Nombre de larves émergentes après 4h** | **% de réduction** |
|---|---|---|---|
| 20 g/m² | 2310 | 217 | 25.40 % |
| 40 g/m² | 2430 | 84 | 71.70 % |
| 60 g/m² | 2880 | 51 | 82.50 % |
| témoin non traité | 2550 | 291 | - |

Les pourcentages de réduction d'émergence obtenus montrent que la poudre acaricide conforme à l'invention est également efficace lorsque les acariens sont à l'état d'oeufs.

## Revendications

1. Utilisation du bicarbonate de sodium comme acaricide.

2. Poudre acaricide comprenant plus de 40 % en poids de bicarbonate de sodium, exempte de substances neurotoxiques et telle que 90 % des granules qui la constituent ont un diamètre inférieur à 100 µm.

3. Poudre selon la revendication 2, **caractérisée en ce qu'**elle comprend au moins 95 % de bicarbonate de sodium.

4. Poudre selon l'une quelconque des revendications 2 et 3, **caractérisée en ce qu'**elle comprend en outre de la terre de Sommières.

5. Poudre selon l'une quelconque des revendications 2 à 4, **caractérisée en ce qu'**elle comprend en outre de la terre de diatomée.

6. Utilisation d'une poudre acaricide selon l'une quelconque des revendications 2 à 5 pour le traitement de l'environnement humain.

7. Utilisation selon la revendication 6 **caractérisée en ce que** lors du traitement la poudre reste à l'état solide et **en ce que** le traitement comprend un brossage.

8. Utilisation selon l'une quelconque des revendications 6 et 7, **caractérisée en ce que** l'environnement humain considéré consiste en tapis et moquettes.

9. Utilisation selon la revendication 8, **caractérisée en ce qu'**on applique une quantité de poudre acaricide ne dépassant pas 60 g par mètre carré.

## Claims

1. Use of sodium bicarbonate as an acaricide.

2. Acaricidal powder comprising more than 40 % by weight of sodium bicarbonate, free of neurotoxic substances, and such that 90 % of the granules constituting it have a diameter of less than 100 µm.

3. Powder according to Claim 2, **characterized in that** it comprises at least 95 % of sodium bicarbonate.

4. Powder according to either of Claims 2 and 3, **characterized in that** it additionally comprises Sommières earth.

5. Powder according to any one of Claims 2 to 4, **characterized in that** it additionally comprises diatomaceous earth.

6. Use of an acaricidal powder according to any one of Claims 2 to 5, for treating the human environment.

7. Use according to Claim 6, **characterized in that** during the treatment, the powder remains in the solid state and **in that** the treatment comprises brushing.

8. Use according to either of Claims 6 and 7, **characterized in that** the human environment considered consists of carpets and rugs.

9. Use according to Claim 8, **characterized in that** a quantity of acaricidal powder not exceeding 60 g per square metre is applied.

## Patentansprüche

1. Verwendung von Natriumbicarbonat als Akarizid.

2. Akarizides Pulver, das über 40 Gew.-% Natriumbicarbonat umfaßt, frei von neurotoxischen Substanzen und derart beschaffen ist, daß 90% der Kömchen, die es ausbilden, einen Durchmesser unter 100 µm aufweisen.

3. Pulver nach Anspruch 2, **dadurch gekennzeichnet, daß** es wenigstens 95% Natriumbicarbonat umfaßt.

4. Pulver nach einem der Ansprüche 2 und 3, **dadurch gekennzeichnet, daß** es zusätzlich tonige Erde (terre de Sommières) umfaßt.

5. Pulver nach einem der Ansprüche 2 bis 4, **dadurch gekennzeichnet, daß** es zusätzlich Diatomeenerde umfaßt.

6. Verwendung eines akariziden Pulvers nach einem der Ansprüche 2 bis 5 zur Behandlung der Umwelt des Menschen.

7. Verwendung nach Anspruch 6, **dadurch gekennzeichnet, daß** während der Behandlung das Pulver in festem Zustand verbleibt und daß die Behandlung ein Bürsten umfaßt.

8. Verwendung nach einem der Ansprüche 6 und 7, **dadurch gekennzeichnet, daß** die in Betracht gezogene Umwelt des Menschen aus Teppichen und Teppichböden besteht.

9. Verwendung nach Anspruch 8, **dadurch gekennzeichnet, daß** pro Quadratmeter eine 60 g nicht übersteigende Menge des akariziden Pulvers aufgetragen wird.
